(19)

**Europäisches Patentamt**
**European Patent Office**
**Office européen des brevets**

(11) **EP 1 762 922 A1**

(12) **EUROPÄISCHE PATENTANMELDUNG**

(43) Veröffentlichungstag:
**14.03.2007 Patentblatt 2007/11**

(51) Int Cl.:
***G05D 16/20*** *(2006.01)*

(21) Anmeldenummer: **05405521.5**

(22) Anmeldetag: **07.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **R. Nussbaum AG**
**4601 Olten (CH)**

(72) Erfinder:
• **Degunda, Niklaus**
**6312 Steinhausen (CH)**
• **Schreiber, Lukas**
**4600 Olten (CH)**

• **Stanimirov, Michael**
**4632 Trimbach (CH)**
• **Bobst, Urs**
**4703 Kestenholz (CH)**
• **Tobler, Hans**
**4632 Trimbach (CH)**
• **Zeiter, Patrik**
**4853 Riken (CH)**

(74) Vertreter: **Roshardt, Werner Alfred**
**Keller & Partner**
**Patentanwälte AG**
**Schmiedenplatz 5**
**Postfach**
**3000 Bern 7 (CH)**

(54) **Armatur zur Druckreduktion in einer Fluidleitung**

(57) Eine Armatur zur Druckreduktion in einer Fluidleitung umfasst ein Gehäuse (1) mit einem Einlass (10) und einem Auslass (20) sowie mit einem mit dem Einlass (10) verbundenen Einlassraum (11) und einem mit dem Auslass (20) verbundenen Auslassraum (21), ein zwischen dem Einlassraum (10) und dem Auslassraum (20) angeordnetes Ventil (30), welches durch Federmittel (80) vorgespannt ist, einen Antrieb (100) zum Bereitstellen einer vorgebbaren Kraft, welcher derart angeordnet ist, dass die vorgebbare Kraft parallel zur Vorspannung auf das Ventil (30) wirken kann, einen Drucksensor (120) zum Erfassen eines auslassseitigen Fluiddrucks sowie eine Steuerung zum Steuern des Antriebs (100) in Abhängigkeit vom erfassten Fluiddruck. Der Hauptteil der Druckreduktion erfolgt weiterhin wie bei einem konventionellen mechanischen Druckreduzierventil, indem das durch die Federmittel (80) vorgespannte Ventil (30) eingesetzt wird. Die durch den Antrieb (100) erzeugte Zusatzkraft kann die Einwirkung der Federmittel (80) in Abhängigkeit vom gemessenen auslassseitigen Druck verstärken oder vermindern. Der Antrieb (100) nimmt somit eine Feinanpassung (bzw. eine Nachstellung) der Sollwerteinstellung vor, während die Grobregelung des Sekundärdrucks durch den konventionellen Teil vorgenommen wird.

Fig. 1

EP 1 762 922 A1

**Beschreibung**

**Technisches Gebiet** Die Erfindung betrifft eine Armatur zur Druckreduktion in einer Fluidleitung, umfassend ein Gehäuse mit einem Einlass und einem Auslass sowie mit einem mit dem Einlass verbundenen Einlassraum und einem mit dem Auslass verbundenen Auslassraum sowie ein zwischen dem Einlassraum und dem Auslassraum angeordnetes Ventil, welches durch Federmittel vorgespannt ist. Die Erfindung betrifft weiter ein Stellmodul für eine derartige Armatur, ein Verfahren zum Betreiben einer solchen Armatur sowie eine Anordnung zur Verteilung von Warm- und Kaltwasser mit solchen Armaturen.

**Stand der Technik** Armaturen zur Druckreduktion, so genannte Druckreduzierventile, sind bekannt. Sie reduzieren einen einlassseitigen, höheren Druck (Primärdruck) auf einen auslassseitigen, niedrigeren Druck (Sekundärdruck). Druckreduzierventile werden insbesondere in Zufuhrleitungen der häuslichen und industriellen Wasserversorgung eingebaut, um den höheren Druck im Verteilnetz auf einen niedrigeren Druck im Abnehmerstrang zu reduzieren. Dadurch werden Leitungen, Armaturen und Verbraucher im Abnehmerstrang vor zu hohen Druck geschützt. Ausserdem lässt sich durch den Einbau eines Druckreduzierventils sekundärseitig ein ungefähr konstanter reduzierter Druck erzielen. Die Geräuschentwicklung im Abnehmerstrang wird vermindert, und der Wasserverbrauch kann reduziert werden. Um Wasserschäden vorzubeugen, ist in Hauswasser-Versorgungsanlagen vielerorts ein maximaler Druck gesetzlich vorgeschrieben, so dass dort der Einbau von Druckreduzierventilen zwingend ist.

Bei herkömmlichen, mechanischen Druckreduzierventilen ist oft ein zwischen dem Einlass und dem Auslass befindliches Ventil durch eine Feder vorgespannt, wobei die Federkraft die Druckdifferenz zwischen dem einlassseitigen und dem auslassseitigen Druck festlegt. Es sind Weiterentwicklungen bekannt, welche das Ziel haben, den auslassseitigen Druck möglichst unabhängig vom einlassseitigen Druck auf einen konstanten, vorgegebenen Wert zu regeln.

Die DE 33 30 299 A1 (Hans Sasserath & Co KG) zeigt beispielsweise eine Sicherheitsarmatur, bei welcher in einer Zwischenwand zwischen der Einlasskammer und der Auslasskammer ein Ventildurchgang ausgebildet ist, welcher auslasskammerseitig einen Ventilsitz aufweist. Gleichachsig zum Ventildurchgang ist einlasskammerseitig eine Membrankammer angeordnet, die mit der Auslasskammer in Verbindung steht und die auf der hinteren Seite durch eine von der vorgespannten Feder beaufschlagte Membran abgeschlossen ist. Der mit dem Ventilsitz zusammenwirkende Ventilteller ist über eine Ventilspindel mechanisch mit der Membran verbunden. Durch die beschriebene Anordnung wird erreicht, dass der auslassseitige Druck durch Verstellung der Federvorspannung unabhängig vom einlassseitigen Druck eingestellt werden kann.

Allerdings nimmt bei höherem Verbrauch im Abnehmerstrang der auslassseitige Druck systembedingt ab. Dafür sind mehrere Faktoren verantwortlich: Zunächst wird beim Öffnen des Ventils die Feder teilweise entspannt, so dass die Federkraft abnimmt. Im Weiteren führen auch Strömungseffekte, beispielsweise Wirbelbildungen im Bereich der Ventilöffnung, zu einem niedrigeren Sekundärdruck. Schliesslich bestehen Reibungseinflüsse, z. B. zwischen der Ventilspindel und einer entsprechenden Führung; diese können sich zudem im Lauf der Lebensdauer der Armatur (beispielsweise infolge Materialalterung) verstärken. Bei einer schnellen Änderung der Durchflussmenge, wenn beispielsweise ein Verbraucher mit einem grossen Wasserbedarf ein- oder ausgeschaltet wird, ergeben sich Druckschwankungen im Abnehmerstrang. Diese können insbesondere beim Bezug von aus Kalt- und Heisswasser gemischtem Warmwasser (Waschbecken, Duschen etc.) zu starken Temperaturschwankungen führen, welche für den Warmwasser-Benutzer ein Verletzungsrisiko bedeuten können.

Weiter sind Druckreduzierventile bekannt, welche eine verbesserte Druckregelung auch bei wechselnder Durchflussmenge erlauben. Diese umfassen ein hydraulisches System, welches sowohl an der Einlass- als auch an der Auslasskammer angeschlossen ist und welches ein Steuerventil (Pilotventil) zum Vergleichen des einlass- und des auslassseitigen Drucks und zum Beaufschlagen des eigentlichen Druckreduzierventils mit entsprechendem Zusatzdruck aufweist. Entsprechende Anordnungen gehen beispielsweise aus der US 2005/0016593 A1 (U. Ephrat, A. Gleichman) hervor oder werden von der Firma E. Hawle Armaturenwerke GmbH, Vöcklabruck, Österreich (z. B. als "Druckreduzierventil 1500") angeboten.

Allerdings weisen solche Druckreduzierventile eine aufwändige Konstruktion auf, sind entsprechend teuer und schwer und haben einen grossen Platzbedarf. Bei der Installation derartiger Ventile sind aufwändige Einstellprozeduren und Justierungen des hydraulischen Systems notwendig.

Eine vereinfachte Lösung schlägt die JP 10143252 A (Matsushita Electric) vor, wobei bei einem Druckreduzierventil, welches dem in der DE 33 30 299 A1 beschriebenen ähnlich ist, ein Pilotventil direkt bei der Mündung der Verbindung aus der Auslasskammer in die Membrankammer angeordnet ist. Allerdings steigt bei dieser Anordnung der Sekundärdruck bis zum Primärdruck an, wenn im Abnehmerstrang kein Wasser bezogen wird.

Schliesslich sind Druckreduzierventile bekannt (siehe beispielsweise DE 196 43 788 A1, Voith Turbo GmbH), bei welchen das eigentliche Ventil in Abhängigkeit des gemessenen auslassseitigen Drucks von einem elektrisch angetriebenen Aktor betätigt wird. Derartige Druckreduzierventile sind jedoch ebenfalls konstruktiv aufwändig und sind bisher nicht im Bereich der Wasserversorgung einsetzbar, ihr Einsatzgebiet sind primär Steuer- und Regelsysteme (z. B. im Maschinen-, Fahrzeug- oder Flugzeugbau). Bei derartigen Vorrichtungen findet bei einer Störung der enthaltenen elektronischen Steuerung oder bei einem Ausfall der Energieversorgung keine Druckreduktion mehr statt und der Sekundärdruck steigt bis zum Primärdruck an.

## Darstellung der Erfindung

Aufgabe der Erfindung ist es, eine dem eingangs genannten technischen Gebiet zugehörende Armatur zur Druckreduktion zu schaffen, welche bei verschiedenen Betriebsbedingungen eine präzise Regelung des auslassseitigen Drucks ermöglicht, einfach aufgebaut und in Betrieb zu nehmen ist und welche auch bei Störungen die Druckreduktionsfunktion weiter wahrnimmt.

Die Lösung der Aufgabe ist durch die Merkmale des Anspruchs 1 definiert. Gemäss der Erfindung umfasst die Armatur neben dem üblichen mechanischen Teil einen Antrieb zum Bereitstellen einer vorgebbaren Kraft, welcher derart angeordnet ist, dass die vorgebbare Kraft parallel zur Vorspannung auf das Ventil wirken kann. Die Armatur umfasst ausserdem einen Drucksensor zum Erfassen eines auslassseitigen Fluiddrucks sowie eine Steuerung zum Steuern des Antriebs in Abhängigkeit vom erfassten Fluiddruck.

Der Hauptteil der Druckreduktion erfolgt bei der erfindungsgemässen Armatur weiterhin wie bei einem konventionellen mechanischen Druckreduzierventil, indem ein durch Federmittel vorgespanntes Ventil eingesetzt wird. Der erfindungsgemässe Antrieb dient zum Bereitstellen einer zusätzlichen Kraft, welche parallel zur Vorspannung auf das Ventil wirken kann, welche also die Einwirkung der Federmittel in Abhängigkeit vom gemessenen auslassseitigen Druck verstärken und/oder vermindern kann. Der Antrieb nimmt somit eine Feinanpassung (bzw. eine Nachstellung) der Sollwerteinstellung vor, während die Grobregelung des Sekundärdrucks durch den konventionellen Teil vorgenommen wird.

Die Feinanpassung kann diejenigen Einflüsse auf den Sekundärdruck präzise kompensieren, welche vom konventionellen Teil des Druckreduzierventils nicht berücksichtigt werden. Je nach Bauweise dieses konventionellen Teils können dies insbesondere Einflüsse eines unterschiedlichen Primärdrucks und/oder eines unterschiedlichen sekundärseitigen Bezugs sein. Die Anforderungen an die Feinanpassung (z. B. hinsichtlich Kraftbereich oder Reaktionszeit) sind somit von den Regelungseigenschaften des konventionellen Teils abhängig.

Die erfindungsgemässe mechatronische Vorrichtung hat eine Reihe von Vorteilen: Weil der Antrieb lediglich die Feinanpassung vornehmen muss, kann er kompakt, kostengünstig und mit einem geringen Energiebedarf ausgeführt werden. Es ist möglich, ein konventionelles (rein mechanisches) Druckreduzierventil so auszubilden, dass der Antrieb später wahlweise nachrüstbar ist. Bei einer Störung der Steuerung oder des Antriebs (z. B. bei einem Ausfall der Energieversorgung) sind ausserdem die Druckreduktion und zum Teil auch die Regelung auf den vorgegebenen Sekundärdruck weiterhin gewährleistet, nämlich insofern als diese Aufgaben vom konventionellen Teil wahrgenommen werden; die erfindungsgemässe Armatur verhält sich somit selbst bei Störungen der zusätzlichen Komponenten weiterhin zumindest wie ein entsprechendes herkömmliches Druckreduzierventil. Zu diesem Zweck wird die Vorspannung der Federmittel derart eingestellt, dass beim Ausbleiben der vorgebbaren Kraft ein auslassseitiger Druck resultiert, welcher einen vorgegebenen Maximaldruck nicht überschreitet. Die Inbetriebnahme der Armatur ist entsprechend einfach: Es ist lediglich (abhängig vom zulässigen maximalen Sekundärdruck) die Vorspannung der Feder zu wählen und in der Steuerung der gewünschte auslassseitige Druck einzustellen.

Die erfindungsgemässe Armatur eignet sich somit insbesondere für Leitungen mittleren Querschnitts, d. h. für Leitungen der Dimensionen DN50 bis DN 100. In diesem Bereich besteht das Bedürfnis nach Druckreduzierventilen, welche den auslassseitigen Druck präzise regeln können. Gleichzeitig sind aber die bekannten komplizierten Lösungen für derartige Leitungen zu teuer und erfordern einen hohen Aufwand bei der Montage und der Inbetriebnahme. Die erfindungsgemässe Armatur kann zudem - wie andere Armaturen - direkt in die Leitung eingebaut werden, was bei den bekannten Druckreduzierventilen mit hydraulischem System wegen des hohen Gewichts und der Baugrösse nicht möglich ist.

Der Anschluss an die Leitung kann z. B. auf einfache Weise mittels einer Pressverbindung erfolgen. Zu diesem Zweck können der Einlass- und der Auslassteil der Armatur mit jeweils einem Pressanschluss versehen sein, welcher direkt am entsprechenden Anschlussstück der Leitung verpresst werden kann.

Die erfindungsgemässe Armatur ist insbesondere in Zweistrang-Wasserverteilungen einsetzbar, bei welchen der Wasserdruck in den Zuleitungen für das Kalt- und für das Warmwasser gesondert reduziert wird. Durch die präzise Einstellung des Sekundärdrucks können zeitlich variierende Druckunterschiede zwischen den beiden Strängen und somit Temperaturschwankungen beim Bezug von Mischwasser vermieden werden. Gleichzeitig ermöglicht die Zweistrang-Anordnung besonders bei einer zentralen Warmwassererzeugung (z. B. in der Heizzentrale einer Siedlung) eine effiziente Installation mit direkten Zuleitungen. Manchenorts ist die gesonderte Druckreduktion für das Kalt- und das Warmwassernetz bei Neuinstallationen zwar wegen den Druckschwankungen hinter konventionellen Druckreduzierventilen und damit wegen der Verletzungsgefahr aufgrund von Temperaturschwankungen des Mischwassers nicht zulässig. Es existieren jedoch eine grosse Zahl von bestehenden Zweistrang-Installationen, bei welchen durch Ersatz der vorhandenen Druckreduzierventile durch die erfindungsgemässe Armatur diese Gefahrenquelle beseitigt werden kann. Es ist auch denkbar, dass bei Verfügbarkeit der erfindungsgemässen, verhältnismässig kostengünstigen Armaturen zu einem späteren Zeitpunkt die ökonomisch an sich sinnvolle Zweistrang-Leitungsführung unter gewissen Bedingungen an die Druckkonstanz der verwendeten Druckreduzierventile wieder zugelassen wird.

Sofern im Abnehmerstrang nicht zwingend ein Dauerbezug stattfindet, ist das Ventil so ausgebildet und wird derart betätigt, dass es eine Verbindung zwischen dem Einlassraum und dem Auslassraum bei Bedarf (wenn im Abnehmerstrang kein Wasserbezug erfolgt) unabhängig vom einlassseitigen Fluiddruck vollständig sperrt. So wird gewährleistet, dass auch bei gänzlich ausbleibendem Bezug keine Druckerhöhung über den vorgegebenen Maximaldruck erfolgt, und eine gesonderte Absperrarmatur erübrigt sich.

Im Rahmen der Erfindung einsetzbare Drucksensoren sind bekannt und kommerziell verfügbar, beispielsweise Membranen, deren Deformation gegen eine Feder mittels eines Hall-Sensors bzw. kapazitiv, induktiv, optisch oder mikromechanisch gemessen wird, oder Dehnungsmessstreifen (DMS). Einsetzbar sind auch piezoelektrische Elemente.

Die Steuerung kann neben dem Steuern des Antriebs in Abhängigkeit vom erfassten Fluiddruck weitere Funktionen übernehmen. So kann ein weiterer Sensor zur Erfassung des Primärdrucks oder des Durchflusses an die Steuerung angeschlossen werden, damit durch Integration der erfassten Werte der Wasserverbrauch erfasst werden kann, die Armatur kann somit gleichzeitig als Wasserzähler dienen. Die Steuerung kann zudem Diagnoseaufgaben übernehmen, z. B. Druckmessungen durchführen, um Lecks im Abnehmerstrang zu detektieren. Die Steuerung führt zudem bevorzugt periodisch Selbsttests aus und umfasst einen Speicher, in welchem die erfassten Daten bzw. die Resultate der Selbsttests oder Diagnoseaufgaben abgelegt werden können. Die Steuerung kann eine Schnittstelle (z. B. entsprechend EIB/Konnex oder LON) umfassen, mittels welcher sie an weiteren Geräten, z. B. an einem Gebäudeautomationssystem, angeschlossen werden kann. Die Übermittlung kann kabelgebunden, drahtlos über eine Funkschnittstelle oder - wenn die Steuerung am Stromnetz angeschlossen ist - via Haushaltsnetz erfolgen.

Das Ventil umfasst mit Vorteil eine zwischen dem Einlassraum und dem Auslassraum angeordnete Ventilöffnung, welche an ihrer Begrenzung auslassraumseitig einen Ventilsitz aufweist. Das Ventil umfasst weiter einen mit dem Ventilsitz zusammenwirkenden Ventilteller, welcher auf seiner dem Einlassraum zugewandten Rückseite durch die Federmittel mit einer Vorspannkraft in Öffnungsrichtung des Ventils beaufschlagt wird. Die auslassseitige Anordnung des Ventiltellers bewirkt, dass das Ventil bei einem Abfall des Sekundärdrucks weiter geöffnet wird, so dass eine grössere Fluidmenge gefördert und der Sekundärdruck somit erhöht wird. Die Federmittel sind beispielsweise als Schrauben-Druckfeder ausgebildet, deren Achse senkrecht zur Ventilöffnung steht und welche am Gehäuse der Armatur abgestützt ist.

Die Armatur ist mit Vorteil so ausgebildet, dass der Ventilteller durch den Antrieb auf seiner Rückseite mit einer zusätzlichen Kraft in Öffnungsrichtung des Ventils beaufschlagt wird, d. h. die Vorspannung der Federmittel wird so eingestellt, dass bei verschwindender Durchflussmenge der gewünschte Sekundärdruck resultiert. Bei grösseren Durchflussmengen nimmt der Antrieb eine Korrektur im Sinn einer Unterstützung der Wirkung der Federmittel vor. Er kann somit die Einflüsse der teilweisen Entspannung der Feder und der Reibungskräfte kompensieren und verhindern, dass die auf das Ventil ausgeübte Kraft abnimmt und der Sekundärdruck unter den Sollwert absinkt. Fällt der Antrieb aus (wegen eines Ausfalls der Stromversorgung oder einer Störung im Antrieb) ist weiterhin gewährleistet, dass der Sekundärdruck den durch die Wahl der Vorspannung vorgegebenen Druck nicht übersteigt. Es resultiert lediglich - wie bei bekannten Druckreduzierventilen - eine gewisse Abnahme des Sekundärdrucks in Abhängigkeit von der Durchflussmenge.

Alternativ kann die Vorspannung so gewählt werden, dass der gewünschte Sekundärdruck bei einer mittleren erwarteten Durchflussmenge erreicht wird, wobei aber bei einem Ausfall des Antriebs selbst bei kleinen Durchflussmengen ein vorgegebener Maximalwert des Sekundärdrucks (welcher in diesem Fall grösser ist als der Sollwert des Sekundärdrucks) nicht überschritten wird. Der Antrieb übt dann, je nach vorzunehmender Druckkorrektur auf das Ventil sowohl Kräfte in Öffnungs- als auch in Schliessrichtung aus, er wird also bei kleinen Durchflussmengen die Wirkung der Vorspannung teilweise kompensieren.

Mit Vorteil umfasst die Armatur eine Membrankammer, die rückseitig zum Ventilteller angeordnet ist, mit dem Auslassraum in Verbindung steht und rückseitig durch eine Membran abgeschlossen ist, wobei die Membran mechanisch mit dem Ventilteller verbunden ist und auf diesen mit Kräften parallel zur Vorspannkraft wirken kann. Die Membran schafft einen Vergleich zwischen dem aktuellen Sekundärdruck und der Federkraft. Ist der aktuelle Sekundärdruck geringer als die Federkraft, wird der Ventilteller durch die Vorspannung der Feder nach vorne, d. h. in Öffnungsrichtung bewegt.

Alternativ kann die Armatur ohne Membran gefertigt werden, wobei je nach Anordnung und Ausbildung des Ventils und entsprechend je nach den herrschenden Druckverhältnissen der Ventilsitz an der Einlass- oder an der Auslassraumseite der Ventilöffnung vorgesehen und/oder die Vorspannung in Öffnungs- oder Schliessrichtung wirkt.

Die Federmittel, der Antrieb und die Membran sind mit Vorteil mit einem mit dem Ventilteller verbundenen Verbindungselement mechanisch gekoppelt. Diese Lösung ist einfach und kostengünstig. Die Elemente lassen sich ausserdem beim Einbau oder beim Ausbau leicht miteinander in das Gehäuse einführen oder daraus entfernen. Falls der Antrieb lediglich nach vorne gerichtete Zusatzkräfte auf das Ventil ausüben soll, kann er auf einfache Weise an das Verbindungselement gekoppelt werden, indem ein Übertragungselement des Antriebs endseitig auf das Element oder auf ein damit mechanisch verbundenes weiteres Element drückt. Das Verbindungselement ist bevorzugt als Verbindungsstange ausgebildet, es kann aber auch ein die Elemente aufnehmender Hohlkörper mit entsprechenden Ein- und Auslassöffnungen für das transportierte Fluid sein oder durch mehrere aussenliegende Verbindungsstege gebildet werden.

Anstelle eines einzelnen sind mehrere, wiederum mechanisch gekoppelte Verbindungselemente einsetzbar, oder die genannten Elemente werden hydraulisch gekoppelt.

Die Armatur umfasst im Weiteren bevorzugt ein Kompensationselement, welches zwischen dem Ventilteller und der Membrankammer am Verbindungselement angeordnet und abdichtend in einer Kammer geführt ist. Ein erster Kammerabschnitt ist auf der dem Ventilteller zugewandten Seite mit dem Einlassraum und ein zweiter Kammerabschnitt ist auf der dem Ventilteller abgewandten Seite mit dem Auslassraum verbunden. Die Wirkoberflächen des Kompensationselements entsprechen beidseitig den entsprechenden Wirkoberflächen des Ventiltellers. Durch diese Anordnung wird eine Kompensation des Primärdrucks bereits durch den mechanischen Teil der Armatur erreicht, so dass eine Änderung desselben keinen Einfluss auf die Betätigung des Ventils hat. Die Feinanpassung durch den Antrieb muss somit nur noch die weiteren Einflüsse auf den Sekundärdruck kompensieren, insbesondere diejenigen, welche durch einen unterschiedlichen sekundärseitigen Bezug bewirkt werden. Der Antrieb wird somit bestmöglich entlastet, so dass er konstruktiv einfach und kompakt ausgeführt werden kann und einen niedrigen Energiebedarf hat.

Alternativ kann die Kompensation unterschiedlicher Primärdrucke ebenfalls vom Antrieb übernommen werden.

Alternativ zur vorstehend erläuterten Ausführungsform kann der Ventilsitz einlassraumseitig angeordnet und der Ventilteller durch eine Zugfeder in Öffnungsrichtung vorgespannt sein. Je nach Beaufschlagung der verschiedenen Ventilteile mit Primär- oder Sekundärdruck kann das Ventil auch in Schliessrichtung vorgespannt sein, je nach Anordnung des Ventilsitzes mittels einer Zug- oder einer Druckfeder. Schliesslich kann das Ventil als Schieber ausgebildet sein.

Mit Vorteil ist die Vorspannung der Federmittel einstellbar. Dadurch lässt sich der gewünschte auslassseitige Fluiddruck wählen, wie er durch den rein mechanischen Teil der Vorrichtung eingestellt werden soll. Beim Ausfall des Drucksensors, der Steuerung oder des Antriebs (z. B. bei einem Stromunterbruch) wird der auslassseitige Druck (bei geringem Bezug) auf diesen Wert geregelt, bei steigendem Bezug kann der resultierende Druck etwas abnehmen. Die Vorspannung wird also mit Vorteil so gewählt, dass bei Ausfall der elektrisch betriebenen Elemente der Sekundärdruck auf einen vorgegebenen Maximaldruck geregelt wird. Die Vorspannung kann alternativ oder gleichzeitig auch so gewählt werden, dass der Energieaufwand für die Feinregelung durch die Steuerung und den Antrieb minimiert wird. Die Einstellbarkeit der Vorspannung wird im Fall einer Schraubenfeder als Federmittel beispielsweise durch eine axial fest angeordnete Gewindespindel mit Aussengewinde realisiert, mit welcher das Innengewinde einer Abstützplatte für die Schraubenfeder zusammenwirkt. Durch eine Relativdrehung zwischen Spindel und Platte können unterschiedliche axiale Positionen der Abstützplatte und somit unterschiedliche Vorspannungen der Feder gewählt werden.

Alternativ wird die Vorspannung der Federmittel durch Einsetzen entsprechender Federmittel gewählt. Beispielsweise sind für eine Armatur mehrere Schraubenfedern mit unterschiedlicher Ruhelänge verfügbar.

Der Antrieb zum Bereitstellen der vorgebbaren Kraft ist bevorzugt elektro-hydraulisch, d. h. er umfasst ein Hydrauliksystem zum Bereitstellen der notwendigen Kräfte, welches mittels elektrisch betätigter Pumpen und gegebenenfalls Ventilen gesteuert wird. Mit einem solchen System lassen sich mit geringem Energieaufwand hohe Kräfte erzeugen und halten.

Der Antrieb umfasst zum Aufbau der vorgebbaren Kraft bevorzugt einen ersten Kammerraum sowie einen zweiten Kammerraum zur Aufnahme einer Hydraulikflüssigkeit. Zwischen den beiden Kammerräumen ist eine elektrisch betätigbare Pumpe angeordnet, deren Funktion durch die Steuerung kontrolliert wird. Am Antrieb ist ein Anschlussteil angeordnet, mittels welchem die erzeugte Kraft auf das Ventil der Armatur übertragen werden kann.

Das Hydrauliksystem umfasst bevorzugt eine Kammer zur Aufnahme einer Hydraulikflüssigkeit sowie bewegliche Mittel zum Unterteilen der Kammer in zwei Kammerräume. Zwischen dem ersten Kammerraum auf einer ersten Seite der beweglichen Mittel und dem zweiten Kammerraum auf einer zweiten Seite der beweglichen Mittel ist die elektrisch betätigbare Pumpe angeordnet zum Pumpen von Hydraulikflüssigkeit aus dem einen in den anderen Kammerraum und damit zum Verschieben und/oder Verformen der beweglichen Mittel bezüglich der Kammer. Zur Kraftübertragung auf das Ventil sind die beweglichen Mittel mit einem Übertragungselement ausserhalb der Kammer mechanisch verbunden.

Die beweglichen Mittel können durch einen Kolben gebildet sein, welcher in der Kammer beweglich und gegenüber den Kammerwänden abdich-tend angeordnet ist. Die Pumpe und die Verbindungsleitungen zwischen der Pumpe und den beiden Kammerräumen können innerhalb des Kolbens angeordnet sein, wodurch sich der Antrieb besonders kompakt ausbilden lässt, oder ausserhalb des Kolbens, wodurch die Stromzuführung für die Pumpe vereinfacht wird.

Der Kolben kann in einer Führung abgedichtet aus dem Zylinder hinaus geführt sein, so dass er auf der Aussenseite ein entsprechendes Element zur Übertragung der Kraft auf das Ventil kontaktieren kann.

Die Kammerräume können auch durch eine flexible Membran voneinander abgetrennt sein, wobei der Anschlussteil mit einer Vorderseite der Membran zusammenwirkt. Auf diese Weise erübrigt sich eine abgedichtete Führung zwischen den beiden Kammerräumen.

Mit Vorteil ist zwischen dem ersten Kammerraum und dem zweiten Kammerraum in einer gesonderten Leitung zusätzlich ein elektrisch betätigbares Ventil, z. B. ein Servoventil oder ein Magnetventil, angeordnet. Dadurch lässt sich der Rückfluss von Hydraulikflüssigkeit (gegen die Pumprichtung) einfach steuern, und die Pumpe muss nur in einer Richtung funktionieren.

Anstelle eines elektro-hydraulischen Antriebs kann auch ein rein elektrischer Antrieb eingesetzt werden, welcher beispielsweise einen Piezoaktor umfasst oder einen Servomotor.

Die erfindungsgemässe Vorrichtung kann modular aufgebaut werden, indem das Ventil und die Federmittel in einem auswechselbaren Ventilmodul und der Antrieb zum Bereitstellen der vorgebbaren Kraft sowie die Steuerung in einem Stellmodul enthalten sind. Das Ventilmodul wird am Gehäuse befestigt, das Stellmodul wiederum am Ventilmodul. Dies ermöglicht einerseits einen einfachen Austausch defekter Elemente und vereinfacht andererseits die Lagerhaltung, indem für verschiedene Durchmesser der Fluidleitung lediglich unterschiedliche Gehäuse bereitgestellt werden müssen, während dasselbe Ventil- bzw. Stellmodul für verschiedene Durchmesser eingesetzt werden kann. Ein Armatursystem kann beispielsweise pro Leitungsquerschnitt ein Gehäuse umfassen, einige Ventilmodule für verschiedene Querschnittsbereiche (und damit verschiedene Druckbereiche und Durchflussmengen) sowie ein universelles Stellmodul, welches mit sämtlichen Ventilmodulen zusammenwirken kann.

Das Ventilmodul und gegebenenfalls das Gehäuse können derart ausgebildet sein, dass eine zunächst rein mechanische Armatur durch ein Stellmodul ergänzt werden kann, um die Feinregelung (und gegebenenfalls weitere Funktionen) zu ermöglichen. Schliesslich können Stellmodule mit verschiedenen Funktionalitäten oder Funktionsparametern (Druckbereich, Art der Energieversorgung, Schnittstellen, Strombedarf, Preis, Zusatzfunktionen) angeboten werden, welche alle am gleichen Ventilmodul angeordnet werden können und welche bei veränderten Bedürfnissen des Nutzers schnell und einfach ausgetauscht werden können, ohne dass die Armatur ausgebaut oder auch nur die Leitung abgesperrt werden muss.

Die Armatur kann eine integrierte Stromversorgung umfassen, welche elektrische Energie aus Druckunterschieden in der Fluidleitung bzw. zwischen der Fluidleitung und einem Umgebungsdruck gewinnt, beispielsweise mittels einer Turbine, eines Lineargenerators oder eines piezoelektrischen Elements. Bei einem Aufbau der Armatur mit einem elektro-hydraulischen Antrieb wie vorstehend beschrieben kann der Energiebedarf für den Antrieb und die Steuerung bei Bedarf derart optimiert werden, dass die im Bereich eines Druckreduzierventils vorhandenen Druckunterschiede zur Energieerzeugung ausreichen. Typischerweise sind die vorhandenen Druckunterschiede zwar nur dann zur Energiegewinnung nutzbar, wenn im Abnehmerstrang ein Bezug stattfindet. Im Rahmen der vorliegenden Erfindung stellt dies aber keinen Nachteil dar, wenn die Vorspannung der Federmittel derart gewählt wird, dass bei geringem Bezug der gewünschte sekundärseitige Druck bereits durch den mechanischen Teil der Armatur eingestellt wird. Bei grösserem Bezug, bei welchem eine Nachregelung durch den elektrisch betriebenen Antrieb notwendig wird, kann eine ausreichende Energiegewinnung stattfinden. Zur Bereitstellung von Betriebsenergie auch bei fehlendem Bezug (beispielsweise für Zusatzfunktionen) oder bei einem schnellen Anstieg des Bezugs kann die Armatur unterstützend einen Energiezwischenspeicher umfassen, beispielsweise einen elektrischen Speicher wie einen Kondensator oder einen Akkumulator, einen mechanischen Speicher wie eine Feder oder ein Schwungrad oder einen pneumatischen Speicher.

Anstelle von Druckunterschieden können auch Temperaturunterschiede ausgenutzt werden, beispielsweise durch Nutzen des sog. Seebeck-Effekts.

Alternativ zur integrierten Stromversorgung kann die Armatur von einem vorhandenen Stromnetz versorgt werden, gegebenenfalls mittels eines zwischengeschalteten Netzgeräts, oder es ist eine austauschbare Batterie vorgesehen.

Die erfindungsgemässe Armatur kann einen Funksender umfassen, der mit dem Drucksensor verbunden ist, sowie einen Funkempfänger, der mit der Steuerung verbunden ist. Somit kann der erfasste Fluiddruck drahtlos zur Steuerung übermittelt werden. Dadurch erübrigt sich der Einsatz von Kabeln zwischen dem Drucksensor und der Steuerung, der Sensor kann zudem entfernt von der Armatur im Abnehmerstrang angeordnet werden, beispielsweise um einen Fluiddruck direkt beim Bezugspunkt zu messen. Zur drahtlosen Übermittlung der Signale können an sich bekannte Standards wie ZigBee oder Bluetooth eingesetzt werden.

Anstelle einer kabelgebundenen oder Funkübertragung können die Signale zwischen dem Drucksensor und der Steuerung auch durch die Fluidleitung übertragen werden, wenn das transportierte Fluid (insbesondere eine transportierte Flüssigkeit wie Wasser) und/oder das Leitungsrohr elektrisch leitfähig sind.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1    Eine schematische Darstellung des Prinzips eines Druckreduzierventils gemäss der Erfindung;

Fig. 2A    eine schematische Darstellung eines Ausführungsbeispiels einer erfindungsgemässen Armatur;

Fig. 2B    eine vergrösserte Darstellung des Stellmoduls der Armatur;

Fig. 3    eine schematische Darstellung eines Stellmoduls mit einer Membran zur Kraftübertragung; und

Fig. 4    eine schematische Darstellung einer Anwendung des erfindungsgemässen Druckreduzierventils.

Grundsätzlich sind in den Figuren gleiche Teile mit gleichen Bezugzeichen versehen.

## Wege zur Ausführung der Erfindung

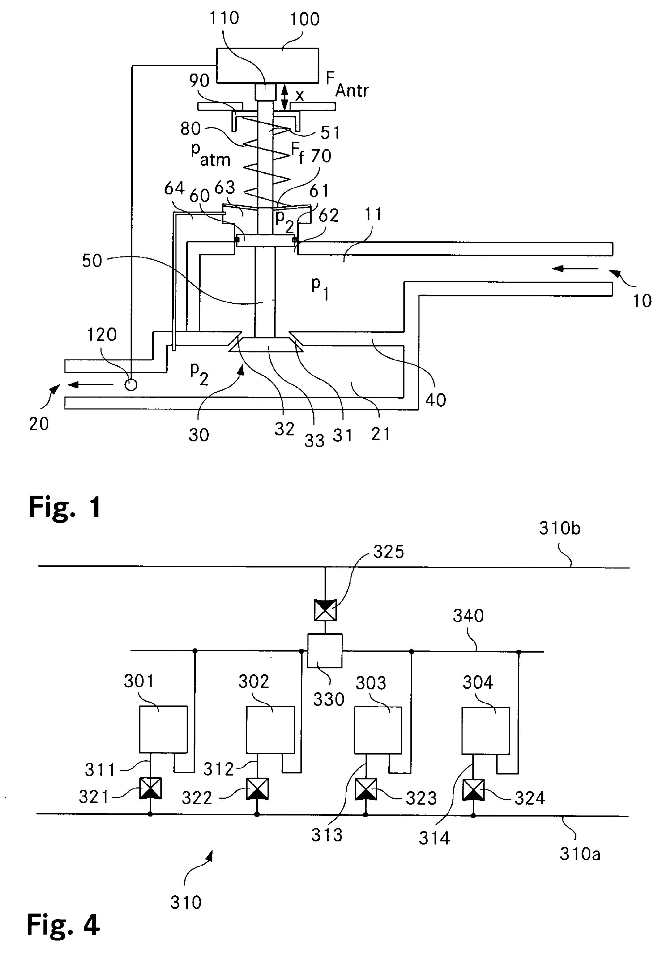

Anhand der Figur 1 wird das allgemeine Prinzip eines Druckreduzierventils gemäss der Erfindung erläutert. Die Armatur zur Druckreduktion umfasst einen Einlass 10, sowie einen Auslass 20, an welche sich jeweils eine Einlasskammer 11 bzw. eine Auslasskammer 21 anschliessen. Zwischen der Einlasskammer 11 und der Auslasskammer 21 ist ein Ventil 30 angeordnet. Dazu ist in einer Trennwand 40 zwischen der Einlasskammer 11 und der Auslasskammer 21 eine Ventilöffnung 31 ausgespart, an deren Auslasskammerseite ein Ventilsitz 32 ausgebildet ist. Ein Ventilteller 33 ist relativ zur Ventilöffnung 31 bewegbar und kann diese in vollständig zurückgezogener Stellung dichtend abschliessen.
An der der Einlasskammer 11 zugewandten Rückseite des Ventiltellers 33 ist eine Verbindungsstange 50 befestigt. Ein Kompensator 60 sowie eine Membran 70 sind an der Verbindungsstange 50 axial unverschiebbar gehalten. Der Kompensator 60 ist in einer Kammer 61 axial beweglich, wobei er die Kammer 61 in zwei voneinander abgedichtete Bereiche 62, 63 teilt. Der vordere (d. h. dem Ventil zugewandte) Bereich 62 steht mit der Einlasskammer 11 direkt in Verbindung, während der hintere Bereich 63 mittels einer Verbindungsleitung 64 mit der Auslasskammer 21 in Verbindung steht. Die hintere Begrenzung des hinteren Bereichs 63 wird durch die verformbare Membran 70 gebildet.
Das Ventil 30 ist durch Federmittel vorgespannt. Zu diesem Zweck stützt sich eine Schraubenfeder 80 mit ihrem vorderen Ende auf der Rückseite der Membran 70 ab. An ihrem hinteren Ende ist die Schraubenfeder 80 an einem Gegenlager 90 abgestützt, wobei der Abstand zwischen dem Gegenlager 90 und der Membran 70 so gewählt ist, dass die Schraubenfeder 80 vorgespannt ist und somit mit einer vorgegebenen Kraft über die Membran 70 und die Verbindungsstange 50 auf den Ventilteller 33 wirkt. Dieser wird somit mit einer Kraft in Öffnungsrichtung des Ventils 30 beaufschlagt.
Hinter dem Gegenlager 90 ist ein Stellmodul 100 an der Armatur angeordnet. Dieses beinhaltet einen Antrieb, mittels welchem ein Übertragungselement 110 in axialer Richtung bewegt werden kann. Das Übertragungselement wirkt mit seiner Stirnseite auf die Rückseite einer mit der Verbindungsstange 50 mechanisch gekoppelten Übertragungsstange 51, Kräfte können somit vom Stellmodul 100 unbeeinflusst von der Schraubenfeder 80 über die Verbindungsstange 50 auf den Ventilteller 33 übertragen werden.
Auf die vordere Seite des Ventiltellers 33 wirkt somit die dem Sekundärdruck $p_2$ entsprechende Kraft, auf seine hintere Seite die dem Primärdruck $p_1$ entsprechende Kraft; der Kompensator 60 ist auf seiner vorderen Seite mit dem Primärdruck $p_1$, auf seiner hinteren Seite mit dem Sekundärdruck $p_2$ beaufschlagt. Auf die Vorderseite der Membran wirkt wiederum die dem Sekundärdruck $p_2$ entsprechende Kraft, auf die Hinterseite wirkt die Federkraft $F_f$ der Schraubenfeder 80 sowie die dem atmosphärischen Druck $p_{atm}$ entsprechende Kraft. Zusätzlich wird wie oben dargelegt eine zusätzliche Kraft $F_{Antr}$ des Antriebs auf den Ventilteller 33 übertragen. Im stationären Fall ergibt sich folgende Kräftebilanz für den Ventilteller 33, wenn allgemein eine Reibkraft R berücksichtigt wird:

$$p_2 * A_{Teller} - p_1 * A_{Teller} + p_1 * A_{Komp} - p_2 * A_{Komp} + p_2 * A_{Memb} - F_f + R - p_{atm} * A_{Memb} - F_{Antr} = 0.$$

Um die auf den Ventilteller 33 wirkenden Kräfte vom Primärdruck $p_1$ unabhängig zu machen, wird die wirksame Fläche $A_{Komp}$ des Kompensators 60 gleich gross gewählt wie die wirksame Fläche $A_{Teller}$ des Ventiltellers 33, so dass sich ergibt:

$$p_2 * A_{Memb} - F_f + R - p_{atm} * A_{Memb} - F_{Antr} = 0 \text{ bzw.}$$

$$(p_2 - p_{atm}) * A_{Memb} + R = F_f + F_{Antr}.$$

Die Einflüsse des Primär- und des Sekundärdrucks auf den Ventilteller 33 und den Kompensator 60 heben sich also insgesamt auf, und es sind lediglich noch die auf die Membran 70 wirkenden Drucke $p_2$ und $p_{atm}$ zu berücksichtigen. Durch Einstellen der Federkraft $F_f$ kann somit der Sekundärdruck $p_2$ unabhängig vom Primärdruck $p_1$ eingestellt werden. Eine Reibungskraft R wirkt der Federkraft $F_f$ entgegen und verringert bei unveränderter Federkraft $F_f$ den Sekundärdruck $p_2$. Durch eine entsprechende Einwirkung mit der Kraft $F_{Antr}$ kann der Einfluss von Reibungskräften R ausgeglichen werden. Das für die Reibungskräfte Gesagte gilt analog auch für ein alterungsbedingtes Nachlassen der Federkraft $F_f$ und für die Verminderung der Federkraft $F_f$ durch Dehnung der Schraubenfeder 80, wenn das Ventil 30 zum Erzielen eines grossen Durchflusses weiter geöffnet wird.

Damit die auszuübende Kraft $F_{Antr}$ bestimmt werden kann, ist eine Druckmesssonde 120 vorhanden, welche den aktuellen Sekundärdruck $p_2$ im Bereich des Auslasses 20 misst und dem Antrieb 100 mitteilt. Dessen Steuerung kann erforderlichenfalls den Antrieb 100 so steuern, dass die Kraft $F_{Antr}$ verändert wird, so dass der Sekundärdruck $p_2$ auf dem gewünschten Wert gehalten wird. Mit diesem Vorgang werden gleichzeitig auch die Einflüsse von Strömungseffekten auf den Sekundärdruck $p_2$ erfasst und ausgeglichen.

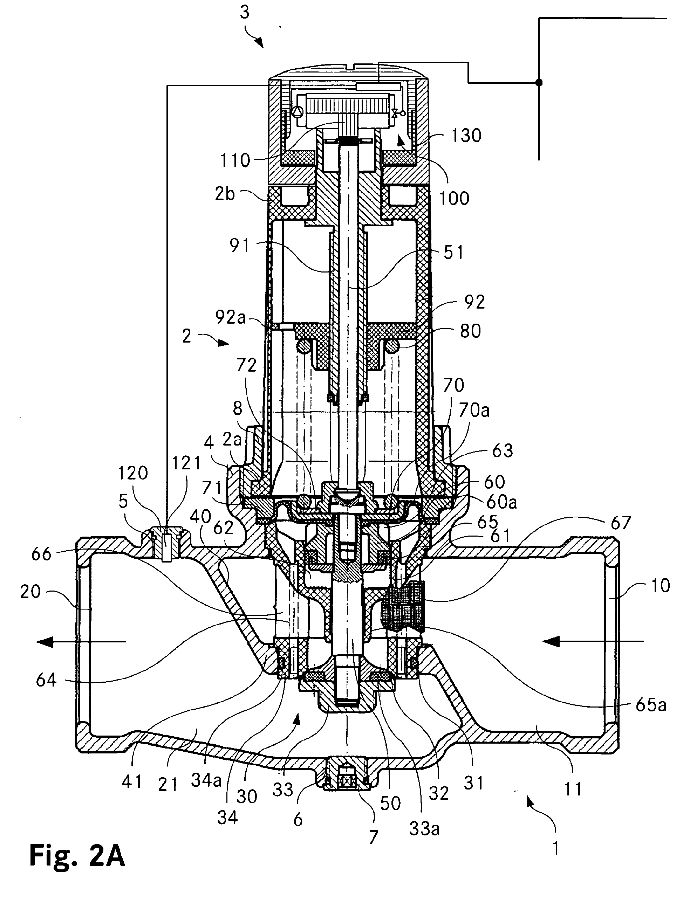

Die Figur 2A ist eine schematische Darstellung eines Ausführungsbeispiels einer erfindungsgemässen Armatur, welche insbesondere für die Druckreduktion in Wasserverteilnetzen geeignet ist. Gezeigt ist ein Querschnitt in derjenigen Ebene, in welcher die Hauptachsen des Gehäuses und des Ventilmoduls verlaufen. Das Funktionsprinzip der Armatur entspricht weitgehend demjenigen, wie es vorstehend im Zusammenhang mit der Figur 1 erläutert worden ist. Die Armatur umfasst ein Gehäuse 1, in welchem der Einlass 10 mit der nachfolgenden Einlasskammer 11, der Auslass 20 mit der vorgeordneten Auslasskammer 21, sowie die Trennwand 40 mit der Ventilöffnung 31 ausgebildet sind. Die Armatur umfasst weiter ein als Patrone ausgebildetes Ventilmodul 2 mit dem Ventil 30, dem Kompensator 60, der Membran 70, der Schraubenfeder 80 sowie weiteren, diesen Elementen zugeordneten Bauteilen. Die Armatur umfasst schliesslich ein Stellmodul 3, welches den Antrieb 100 enthält.

Das Gehäuse 1 ist aus Rotguss gefertigt und im Wesentlichen rohrförmig ausgebildet. In der Rohrachse sind der Einlass 10 und der Auslass 20 ausgebildet, seitlich, rechtwinklig zur Rohrachse ist eine Aufnahme 4 für das Ventilmodul 2 in der Gehäusewandung ausgebildet. Die schräg zur Hauptachse des Gehäuses 1 verlaufende Trennwand 40 unterteilt den rohrförmigen Innenraum des Gehäuses 1 in die Einlasskammer 10 und in die Auslasskammer 20, wobei in der Trennwand 40 eine Stufe 41 parallel zur Rohrachse ausgebildet ist, in welcher die Ventilöffnung 31 ausgebildet ist. Diese ist parallel zur Aufnahme 4 für das Ventilmodul 3 orientiert, die entsprechenden Flächen sind koaxial zueinander ausgebildet. Weiter im Gehäuse ausgebildet ist im Bereich der Auslasskammer 21 eine Aufnahme 5 für den Drucksensor 120. Dieser ist dichtend in der Aufnahme 5 aufgenommen und erfasst mittels eines Messelements 121 mit einem Piezosensor den Sekundärdruck in der Auslasskammer 21. Der Aufnahme 4 für das Ventilmodul 2 gegenüberliegend ist eine Entleeröffnung 6 im Gehäuse 1 ausgebildet. Diese ist während des normalen Betriebs der Armatur durch einen Zapfen 7 dicht verschlossen. Wahlweise kann anstelle des Zapfens 7 das Anschlussstück eines Manometers in die Öffnung eingesetzt werden.

Das Gehäuse des Ventilmoduls 2 besteht aus Kunststoff und ist im Wesentlichen zylindrisch ausgebildet. An seinem vorderen Ende weist das Gehäuse einen flanschartig nach aussen weisenden Abschnitt 2a auf, über welchen es mittels eines Schraubrings 8 aus Messing in der Aufnahme 4 des Gehäuses 1 befestigt werden kann. Zu diesem Zweck wirkt ein Aussengewinde des Schraubrings 8 mit einem Innengewinde der Aufnahme 4 zusammen.

Vorne an das Ventilmodul-Gehäuse schliesst der Kompensatorteil 65 an, in welchem die im Wesentlichen zylindrische Kammer 61 zur Aufnahme des Kompensators 60 ausgebildet ist. Die Achse der Kammer 61 fällt mit der Symmetrieachse des Ventiltellers 33 und der Verbindungsstange 50 vom Kompensator 60 zum Ventilteller 33 zusammen. Der Kompensator 60 ist fest an der Verbindungsstange 50 angeordnet und weist eine umlaufende Ringdichtung 60a zur Abdichtung gegenüber der Wand der Kammer 61 auf, so dass die Kammer in zwei voneinander abgedichtete Bereiche 62, 63 unterteilt wird. Der Kompensatorteil 65 läuft nach vorne hin zu und bildet im Bereich seines vorderen Endes eine Führung 65a für die Verbindungsstange 50. Zwischen der Verbindungsstange 50 und der Führung 65a erfolgt keine Abdichtung, so dass der vordere Bereich 62 des Kompensatorteils 61 in Verbindung mit der Einlasskammer 11 steht. Der hintere Bereich 63 des Kompensatorteils 61 steht über axiale Verbindungsleitungen 64 in Kontakt mit der Auslasskammer 21. Die Verbindungsleitungen 64 sind als fortlaufende Durchlassöffnungen im Kompensatorteil 65, in beabstandeten, durch die Einlasskammer 11 verlaufenden, axialen Stegen 66 sowie im am vorderen Ende der Stege 66 befestigten, hohlzylindrischen Ventilsitzelement 34 ausgebildet.

Das Ventilsitzelement 34 weist auf seiner Aussenfläche eine ringförmige Dichtung 34a auf zur Abdichtung gegenüber der Ventilöffnung 31, auf seiner Innenfläche ist der Ventilsitz 32 ausgebildet. Der Ventilteller 33 aus Messing ist am vorderen Ende der Verbindungsstange 50 befestigt und wirkt mit einem an seiner konisch zulaufenden Rückseite angeordneten Dichtring 33a aus EPDM mit dem Ventilsitz 32 zusammen. Der Ventilteller 33 lässt sich innerhalb der Auslasskammer 21 axial verschieben, wobei bei gänzlich zurückgezogenem Ventilteller 33 das Ventil 30 dicht verschlossen ist. Die Stege 66 des Kompensatorteils 60 sind durch einen zylindermantelförmigen Grobfilter 67 aus nicht-rostendem Stahl umgeben, welcher verhindert, dass im angeförderten Fluid enthaltene Partikel in den eigentlichen Ventilteil gelangen und dort zu Störungen führen.

Die hintere Begrenzung der Kammer 61 des Kompensatorteils 64 wird durch die Membran 70 gebildet. Diese ist entlang ihres Umfangs zwischen dem Gehäuse des Ventilteils 2 und dem Kompensatorteil 64 mittels eines ringförmigen Zwischenstücks 71 festgeklemmt. In einem inneren kreisförmigen Bereich ist die Membran 70 zwischen einer Halteplatte 72 und einem inneren, verlängerten Bereich des Kompensators 60 eingespannt, wobei an der Halteplatte 72 nach vorne die Verbindungsstange 50 sowie nach hinten die Übertragungsstange 51 befestigt sind. Ausserhalb des inneren kreisförmigen Bereichs weist die Membran 70 eine ringförmige Sicke 70a auf, welche bis zu einer gewissen maximalen Auslenkung eine weitgehend freie axiale Bewegung der Membran 70 ermöglicht.

Das Gehäuse des Ventilteils 2 weist an seinem hinteren Ende einen nach innen weisenden flanschartigen Abschnitt 2b auf, in welchem eine Hohlspindel 91 drehbar gehalten ist. Die Hohlspindel 91 nimmt die Übertragungsstange 51 drehbar auf und stützt sich auf dieser ab. Auf der Aussenseite der Hohlspindel 91 ist ein Aussengewinde ausgebildet, mit welchem ein Innengewinde einer Abstützmutter 92 zusammenwirkt. Der Aussendurchmesser der Abstützmutter 92 entspricht dem Innendurchmesser des Gehäuses des Ventilteils 2, zwischen der Abstützmutter 92 und dem Gehäuse ist zudem eine Verdrehsicherung 92a ausgebildet. Die Abstützmutter 92 ist somit innerhalb des Gehäuses des Ventilteils 2 axial verschiebbar, aber drehfest geführt. Durch ein Verdrehen der Hohlspindel 91 wird somit die Abstützmutter 92 relativ zum Gehäuse in axialer Richtung bewegt. Zwischen der Halteplatte 72 und der Abstützmutter 92 ist die Schraubenfeder 80 als Druckfeder eingespannt, wobei deren Symmetrieachse mit den Achsen der innerhalb der Schraubenfeder 80 aufgenommenen Übertragungsstange 51 und der Hohlspindel 91 zusammenfällt. Durch Verstellen der Abstützmutter 92 kann somit die Vorspannung der Schraubenfeder 80 eingestellt werden.

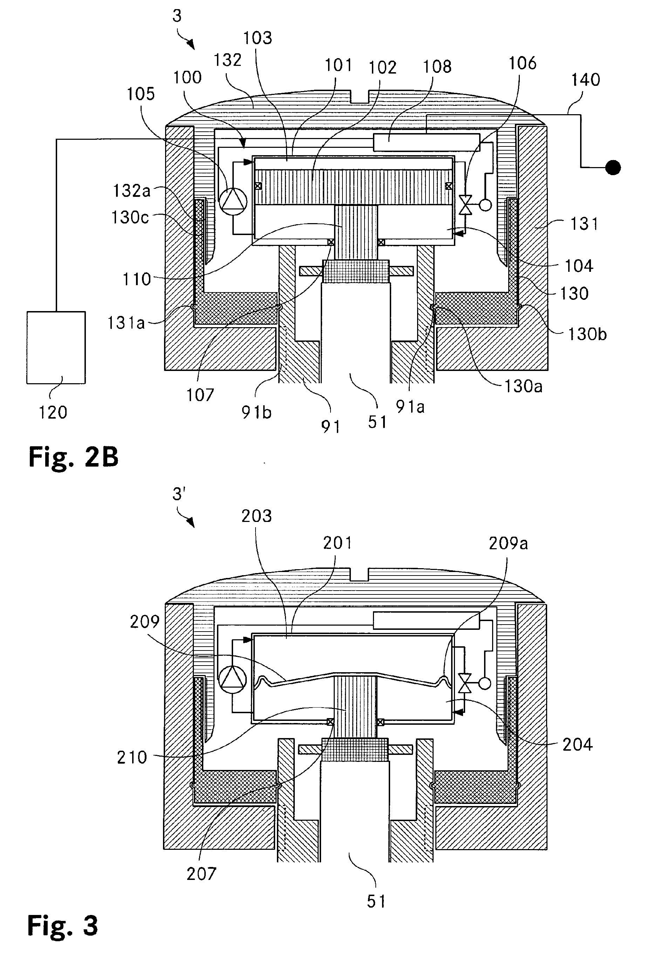

Das Stellmodul 3 ist an das hintere Ende des Ventilmoduls 2 gekoppelt. Seine Form ist im Wesentlichen zylindrisch und schliesst passend an das Ventilmodul 2 an. Die Figur 2B zeigt eine vergrösserte Darstellung des Stellmoduls. Das Stellmodul umfasst einen zylindrischen Gehäuseteil 130 mit einem Boden, in welchem eine durchgehende Öffnung zur Aufnahme der Übertragungsstange 51 und der darauf gehaltenen Hohlspindel 91 ausgebildet ist. An der Kontaktfläche zwischen dem Gehäuseteil 130 und der Aussenfläche der Hohlspindel 91 sind am Gehäuseteil 130 eine umlaufende Erhebung 130a und an der Hohlspindel 91 eine passende umlaufende Nut 91a ausgebildet (siehe Figur 2B). Der Gehäuseteil 130 ist somit an der Hohlspindel 91 drehbar aber axial unverschiebbar gehalten. Aussen auf dem Gehäuseteil 130 ist ferner eine zylindrische Einstellschraube 131 drehbar und axial unverschiebbar gehalten, wozu an der Aussenfläche des Gehäuseteils 130 wiederum eine ringförmige Erhebung 130b und an der Innenfläche der Einstellschraube 131 eine entsprechende ringförmige Nut 131a ausgebildet sind. Wie der Gehäuseteil 130 ist die Einstellschraube 131 im Wesentlichen zylindrisch und weist einen Boden mit einer durchgehenden Öffnung zur Aufnahme der Übertragungsstange 51 und der Hohlspindel 91 auf. Im Bereich dieser Öffnung weist die Hohlspindel 91 eine Vierkantprofilierung 91 b auf, mit welcher die entsprechend geformte Öffnung der Einstellschraube 131 derart zusammenwirkt, dass sich eine Drehbewegung der Einstellschraube 131 auf die Hohlspindel 91 überträgt. Mittels Drehen der Einstellschraube 131 kann somit auf einfache Weise von aussen die axiale Position der Abstützmutter 92 verstellt und damit die Vorspannung der Schraubenfeder 80 eingestellt werden.

Das Gehäuse des Stellmoduls 3 wird am hinteren Ende durch eine Sicherungsschraube 132 abgeschlossen. Diese wirkt über ein Aussengewinde 132a mit einem entsprechenden Innengewinde 130c am Gehäuseteil 130 zusammen. Die Sicherungsschraube 132 dient als Gegenlager für den im Stellmodul 3 enthaltenen Antrieb 100 und stützt diesen für den Aufbau der zusätzlichen Nachstellkräfte ab.

Der Antrieb 100 umfasst einen Zylinder 101, in welchem ein Kolben 102 axial beweglich, gegenüber den Zylinderwänden abdichtend angeordnet ist. Der Kolben 102 unterteilt den Zylinderinnenraum in eine hintere Kammer 103 sowie in eine vordere Kammer 104. Zwischen den beiden Kammern sind über ausserhalb des Zylinders 101 angeordnete, getrennte Leitungen eine als Mikropumpe ausgebildete Pumpe 105 sowie ein Ventil 106 (Mikroventil) angeordnet, welche beide elektrisch betätigbar sind. Die Kammern 103, 104, die Leitungen von und zu der Pumpe 105 und dem Ventil 106 sowie die Pumpe 105 und das Ventil 106 selbst bilden ein Hydrauliksystem, in welchem eine Hydraulikflüssigkeit zirkulieren kann. Diese kann durch Betätigen der Pumpe 105 und des Ventils 106 zwischen den beiden Kammern 103, 104 bewegt werden, so dass der Kolben 102 in axialer Richtung wahlweise nach hinten oder nach vorne bewegt wird. Wird das Ventil 106 geschlossen, bleibt die Zylinderposition unverändert, ohne dass weitere, energieaufwändige Aktionen notwendig sind. Vorne an den Kolben 102 ist das Übertragungselement 110 gekoppelt, welches in einer axialen Führung 107 abgedichtet aus dem Zylinder 101 hinaus geführt ist und welches mit seiner vorderen Stirnfläche das hintere Ende der Übertragungsstange 51 kontaktiert. Die durch den Antrieb 100 aufgebaute Zusatzkraft kann somit über die Übertragungsstange 51 unabhängig von der Schraubenfeder 80 direkt auf die Membran 70 und somit auf das Ventil 30 übertragen werden.

Die Pumpe 105 sowie das Ventil 106 werden von einer im Stellmodul 3 untergebrachten Steuerung 108 betätigt, d. h. gesteuert und mit Energie versorgt. Die Steuerung 108 ist zur Stromversorgung (über ein entsprechendes Netzgerät) an das Haushaltsnetz 140 angeschlossen und weist eine Verbindung mit der Druckmesssonde 120 zum Erfassen des Sekundärdrucks in der Auslasskammer 21 auf.

Im Folgenden wird die Funktionsweise der erfindungsgemässen Armatur beschrieben. Die Vorspannung der Feder wird mittels des Einstellgriffs 131 so eingestellt, dass ohne Zusatzkraft durch den Antrieb ein vorgegebener Sekundärdruck $p_2^{mech}$ (beispielsweise 4 bar) resultiert. Wie oben dargelegt, ist folgende Federkraft einzustellen:

$$F_f = (p_2^{mech} - p_{atm}) * A_{Memb}.$$

Unbeeinflusst durch Änderungen des Primärdrucks $p_1$ regelt der mechanische Teil der Armatur den Sekundärdruck $p_2$ bei kleinen Durchflussmengen und vernachlässigbaren Reibungseinflüssen stets auf den eingestellten Wert $p_2^{mech}$: Fällt der aktuelle Sekundärdruck $p_2$ unter den voreingestellten Wert $p_2^{mech}$, z. B. wenn im Abnehmerstrang eine Entnahmestelle geöffnet wird, erniedrigt sich der Druck auf die Membran 70, so dass diese aufgrund der Federkraft $F_f$ nach vorne bewegt wird, wodurch sich mittels Verbindungsstange 50 auch der Ventilteller 33 nach vorne bewegt und das Ventil 30 somit weiter öffnet. Der Durchfluss aus der Einlasskammer 11 in die Auslasskammer 21 und somit der Sekundärdruck $p_2$ steigen somit an, bis sich bei Erreichen des vorgegebenen Drucks $p_2^{mech}$ die Kräfte an der Membran 70 wieder aufheben.

Beim Auftreten von Reibungskräften, bei Strömungseinflüssen oder bei einer Verringerung der Federkraft $F_f$ durch die teilweise Entspannung der Feder reduziert sich die effektiv auf die Membran 70 in Öffnungsrichtung wirkende Kraft, das Ventil 30 schliesst sich etwas, und der aktuelle Druck $p_2$ sinkt unter den vorgegebenen Wert $p_2^{mech}$. Dies wird vom Drucksensor 120 erfasst und veranlasst die Steuerung 108, durch Betätigen der Pumpe 105 und des Ventils 106 den Kolben 102 nach vorne zu bewegen, um eine gewisse Zusatzkraft $F_{Antr}$ auf das Ventil 30 auszuüben bis der gemessene Sekundärdruck $p_2$ wieder der Voreinstellung $p_2^{mech}$ entspricht.

Der Antrieb 100 ist derart ausgebildet, dass bei einem Ausfall des Antriebs 100 aufgrund einer Betriebsstörung oder eines Stromunterbruchs automatisch das Ventil 106 geöffnet wird. Die Hydraulikflüssigkeit strömt somit unter dem Einfluss der Gegenkraft der Übertragungsstange 51 in die vordere Kammer 104 zurück und die Zusatzkraft $F_{Antr}$ fällt stark ab. Der mechanische Teil der Armatur gewährleistet somit, dass der Sekundärdruck $p_2$ weiterhin im Wesentlichen auf maximal $p_2^{mech}$ geregelt wird.

Die Steuerung 107 ist generell so eingestellt, dass sie beim Unterschreiten eines gewissen minimalen Drucks die Pumpe 105 betätigt, um Hydraulikflüssigkeit aus der vorderen Kammer 104 in die hintere Kammer 103 zu pumpen, so dass eine Kraft am Übertragungselement 110 aufgebaut wird. Bei Überschreitung eines gewissen maximalen Drucks öffnet das Ventil 106, so dass Hydraulikflüssigkeit aus der hinteren Kammer 103 in die vordere Kammer 104 zurückströmen kann, wobei der Transport der Hydraulikflüssigkeit durch den aufgrund des erhöhten Sekundärdrucks via Übertragungselement 110 nach hinten gedrückten Kolben 102 ohne zusätzlichen Energieaufwand bewirkt wird. Entspricht der gemessene Druck bis auf eine Toleranz der Druckvorgabe, wird das Ventil 106 geschlossen und die Pumpe 105 ist inaktiv.

Der vorgegebene Druck (Sollwert) kann dem minimalen Druck $p_2^{mech}$ entsprechen, so dass bei geringem Durchfluss und minimaler Reibung keine Zusatzkraft aufgebracht werden muss, oder er kann im Rahmen des Regelbereichs des Antriebs 100 höher als $p_2^{mech}$ gewählt werden, so dass bereits bei geringem Durchfluss eine gewisse Zusatzkraft aufgebracht werden muss, wobei aber bei Bedarf mittels des Antriebs 100 auch ein geringerer Sekundärdruck eingestellt werden kann. Beim Ausfall des Antriebs 100 fällt der Sekundärdruck wiederum auf maximal $p_2^{mech}$ zurück.

Die Figur 3 zeigt eine schematische Darstellung eines Stellmoduls mit einer Membran zur Kraftübertragung. Das Stellmodul 3' entspricht in weiten Teilen dem im Zusammenhang mit den Figuren 2A und 2B dargestellten Stellmodul 3. Im Folgenden wird deshalb primär auf die Unterschiede eingegangen. Anstelle eines Kolbens ist innerhalb eines Zylinders 201 eine Membran 209 vorgesehen. Diese ist durchgehend an der Zylinderinnenwand befestigt und unterteilt somit den Zylinderinnenraum in eine hintere Kammer 203 sowie in eine vordere Kammer 204. Die Membran 209 weist angrenzend an den Zylindermantel eine umlaufende Sicke 209a auf, welche ein ungehindertes Verformen der Membran 209 zulässt. Die Kammern 203, 204 sind ausserhalb des Zylinders 201 durch Leitungen verbunden. Die von der Hydraulikflüssigkeit auf die Membran 209 ausgeübte Kraft wird wiederum auf ein Übertragungselement 210 übertragen, welches an der vorderen Seite der Membran befestigt und in einer axialen Führung 207 abgedichtet aus dem Zylinder 201 hinaus geführt ist und welches mit seiner vorderen Stirnfläche das hintere Ende der Übertragungsstange 51 kontaktiert. So kann die durch den Antrieb aufgebaute Zusatzkraft über die Übertragungsstange 51 unabhängig von der Schraubenfeder direkt auf die Membran und somit auf das Ventil übertragen werden.

Die Figur 4 zeigt eine schematische Darstellung einer möglichen Anwendung des erfindungsgemässen Druckreduzierventils. Mehrere Wohneinheiten 301, 302, 303, 304 (z.B. mehrere Häuser einer Siedlung) werden mit Kalt- und mit Warmwasser versorgt. Die Versorgung mit Kaltwasser erfolgt mittels Zuleitungen 311, 312, 313, 314 direkt aus einem Abschnitt 310a des Wasserleitungsnetzes 310, wobei zwischen der Wasserleitung 310a und dem Verteilnetz in der entsprechenden Wohneinheit 301...304 jeweils ein erfindungsgemässes, wie oben beschriebenes Druckreduzierventil 321, 322, 323, 324 in der Kaltwasserzuleitung 311, 312, 313, 314 vorgesehen ist. Dieses reduziert den Druck im (öffentlichen) Wasserverteilnetz auf den gewünschten Druck im Verteilnetz der Wohneinheit 301...304.

Das Warmwasser für die Wohneinheiten 301...304 wird zentral in einer Heizzentrale 330 erzeugt, dazu ist die Heizzentrale 330 über ein weiteres Druckreduzierventil 325 an einen anderen Abschnitt 310b des Wasserleitungsnetzes 310 angeschlossen. Von der Heizzentrale 330 wird das Warmwasser über einen zweiten Strang 340 zu den einzelnen Wohneinheiten 301...304 verteilt.

Durch den Einsatz der erfindungsgemässen Druckreduzierventile 321...325 wird sichergestellt, dass der Druck in beiden Strängen unabhängig vom Primärdruck und vom Wasserbezug präzise auf den gewünschten Wert eingestellt wird. So können zeitlich variierende Druckunterschiede zwischen den beiden Strängen und somit Temperaturschwankungen beim Bezug von Mischwasser vermieden werden.

Die Erfindung ist nicht auf die dargestellten Ausführungsbeispiele beschränkt. Sowohl der mechanische Teil der Armatur als auch das Stellmodul lassen sich in mancherlei Hinsicht konstruktiv und funktionell verändern oder erweitern. Der mechanische Teil kann beispielsweise konstruktiv einfacher ausgebildet sein und primär eine Druckbegrenzung auf einen vorgegebenen Maximalwert leisten, wobei das Stellmodul die Regelung auf den vorgegebenen Sekundärdruck abhängig vom Primärdruck, dem Durchfluss und weiteren Einflüssen leistet. Der Drucksensor kann weiter entfernt vom Ventil angeordnet sein, oder es können mehrere Drucksensoren vorhanden sein, um den effektiven Sekundärdruck beispielsweise auch nahe einer Bezugsstelle zu erfassen.

Das Stellmodul kann mit einem anders aufgebauten oder gänzlich andersartigen Antrieb versehen sein, die Stromversorgung für den Antrieb und die entsprechende Steuerung kann überdies in die Armatur integriert sein, beispielsweise als im Ventilteil untergebrachte Mikroturbine. Die Form des Stellmoduls muss nicht der dargestellten entsprechen; der Durchmesser des Moduls kann beispielsweise auch grösser gewählt werden als derjenige des Ventilmoduls.

Das Stellmodul kann auf verschiedene Weise erweitert werden. Beispielsweise kann es einen zusätzlichen Antrieb umfassen, mit welchem die Vorspannung der Schraubenfeder motorisch eingestellt werden kann, sowie einen zusätzlichen Sensor zur Bestimmung der aktuellen Durchflussmenge. So lässt sich einerseits die Vorspannung der Schraubenfeder bei der Inbetriebnahme der Armatur nach Eingabe des Solldrucks sowie des Maximaldrucks vollautomatisch einstellen, und andererseits können sich verändernde Reibungseinflüsse während der Lebensdauer der Armatur automatisch durch Nachstellen der Vorspannung kompensiert werden. Der elektro-hydraulische Antrieb ist dann nur noch für die Kompensation der durchflussabhängigen Einflüsse notwendig.

Der Einsatzbereich der erfindungsgemässen Armatur beschränkt sich nicht auf die dargestellte Zweistrang-Wasserverteilung sondern erstreckt sich auf eine grosse Zahl von Anwendungen, bei welchen bisher konventionelle Druckreduzierventile oder aber komplexe Druckregelventile mit hydraulischem System eingesetzt werden.

Zusammenfassend ist festzustellen, dass durch die Erfindung eine Armatur zur Druckreduktion geschaffen wird, welche bei verschiedenen Betriebsbedingungen eine präzise Regelung des auslassseitigen Drucks ermöglicht, einfach aufgebaut und in Betrieb zu nehmen ist und welche auch bei Störungen die Druckreduktionsfunktion weiter wahrnimmt.

**Patentansprüche**

1. Armatur zur Druckreduktion in einer Fluidleitung, umfassend

   a) ein Gehäuse (1) mit einem Einlass (10) und einem Auslass (20) sowie mit einem mit dem Einlass (10) verbundenen Einlassraum (11) und einem mit dem Auslass (20) verbundenen Auslassraum (21);
   b) ein zwischen dem Einlassraum (10) und dem Auslassraum (20) angeordnetes Ventil (30), welches durch Federmittel (80) vorgespannt ist;
   **gekennzeichnet durch**
   c) einen Antrieb (100) zum Bereitstellen einer vorgebbaren Kraft, welcher derart angeordnet ist, dass die vorgebbare Kraft parallel zur Vorspannung auf das Ventil (30) wirken kann;
   d) einen Drucksensor (120) zum Erfassen eines auslassseitigen Fluiddrucks;
   e) einer Steuerung (108) zum Steuern des Antriebs (100) in Abhängigkeit vom erfassten Fluiddruck.

2. Armatur nach Anspruch 1, **dadurch gekennzeichnet, dass** das Ventil (30) eine zwischen dem Einlassraum und dem Auslassraum angeordnete Ventilöffnung (31) umfasst, welche an ihrer Begrenzung auslassraumseitig einen Ventilsitz (32) aufweist, und dass das Ventil (30) weiter einen mit dem Ventilsitz zusammenwirkenden Ventilteller (33) umfasst, welcher auf einer dem Einlassraum (10) zugewandten Rückseite des Ventiltellers (33) durch die Federmittel (80) mit einer Vorspannkraft in Öffnungsrichtung des Ventils (30) beaufschlagt wird.

3. Armatur nach Anspruch 2, **dadurch gekennzeichnet, dass** der Ventilteller (33) durch den Antrieb (100) auf seiner Rückseite mit einer zusätzlichen Kraft in Öffnungsrichtung des Ventils (30) beaufschlagt werden kann.

4. Armatur nach Anspruch 2 oder 3, **gekennzeichnet durch** eine Membrankammer (63), die rückseitig zum Ventilteller (33) angeordnet ist, mit dem Auslassraum (20) in Verbindung steht und rückseitig **durch** eine Membran (70) abgeschlossen ist, wobei die Membran (70) mechanisch mit dem Ventilteller (33) verbunden ist und auf diesen mit Kräften parallel zur Vorspannkraft wirken kann.

5. Armatur nach Anspruch 4, **gekennzeichnet durch** ein mit dem Ventilteller (33) verbundenes Verbindungselement (50), mit welchem die Federmittel (80), der Antrieb (100) und die Membran (70) mechanisch gekoppelt sind.

6. Armatur nach Anspruch 5, **gekennzeichnet durch** ein Kompensationselement (60), welches zwischen dem Ventilteller (33) und der Membrankammer (63) am Verbindungselement (50) angeordnet und abdichtend in einer Kammer (61) geführt ist, wobei ein erster Kammerabschnitt (62) auf der dem Ventilteller (33) zugewandten Seite mit dem Einlassraum (11) und ein zweiter Kammerabschnitt (63) auf der dem Ventilteller (33) abgewandten Seite mit dem Auslassraum (21) verbunden ist und wobei Wirkoberflächen des Kompensationselements (60) beidseitig entsprechenden Wirkoberflächen des Ventiltellers (33) entsprechen.

7. Armatur nach einem der Ansprüche 1 bis 6, **dadurch gekennzeichnet, dass** die Vorspannung der Federmittel (80) einstellbar ist.

8. Armatur nach einem der Ansprüche 1 bis 7, **dadurch gekennzeichnet, dass** der Antrieb (100) elektro-hydraulisch ist.

9. Armatur nach Anspruch 8, **dadurch gekennzeichnet, dass** der Antrieb (100) eine Kammer (101) zur Aufnahme einer Hydraulikflüssigkeit sowie bewegliche Mittel (102; 209) zum Unterteilen der Kammer (101; 201) in einen ersten Kammerraum (103: 203) auf einer ersten Seite der beweglichen Mittel (102; 209) und einen zweiten Kammerraum (104; 204) auf einer zweiten Seite der beweglichen Mittel (102, 209), wobei zwischen den Kammerräumen (103, 104; 203, 204) eine elektrisch betätigbare Pumpe (105) angeordnet ist.

10. Armatur nach Anspruch 9, **dadurch gekennzeichnet, dass** zwischen dem ersten Kammerraum (103; 203) und dem zweiten Kammerraum (104; 204) in einer gesonderten Leitung zusätzlich ein elektrisch betätigbares Ventil (106) angeordnet ist.

11. Armatur nach einem der Ansprüche 1 bis 10, **dadurch gekennzeichnet, dass** sie modular aufgebaut ist, indem das Ventil (30) und die Federmittel (80) in einem auswechselbaren Ventilmodul (2) und der Antrieb (100) zum Bereitstellen der vorgebbaren Kraft sowie die Steuerung (108) in einem auswechselbaren, am Ventilmodul (2) befestigbaren Stellmodul (3) enthalten sind.

12. Armatur nach einem der Ansprüche 1 bis 11, **gekennzeichnet durch** eine integrierte Stromversorgung, welche elektrische Energie aus Druckunterschieden in der Fluidleitung bzw. zwischen der Fluidleitung und einem Umgebungsdruck gewinnt.

13. Armatur nach einem der Ansprüche 1 bis 12, **gekennzeichnet durch** einen Funksender, der mit dem Drucksensor verbunden ist sowie **durch** einen Funkempfänger, der mit der Steuerung verbunden ist, so dass der erfasste Fluiddruck drahtlos zur Steuerung übermittelbar ist.

14. Armatur nach einem der Ansprüche 1 bis 13, **dadurch gekennzeichnet, dass** das Ventil (30) eine Verbindung zwischen dem Einlassraum (11) und dem Auslassraum (21) unabhängig von einem einlassseitigen Fluiddruck vollständig sperren kann,

15. Stellmodul für eine Armatur nach Anspruch 11, mit einem Antrieb (100) zum Bereitstellen einer vorgebbaren Kraft sowie einer Steuerung (108), wobei

    a) der Antrieb (100) einen ersten Kammerraum (103; 203) sowie einen zweiten Kammerraum (104; 204) zur Aufnahme einer Hydraulikflüssigkeit umfasst;

b) zwischen dem ersten Kammerraum (103; 203) und dem zweiten Kammerraum (104; 204) eine elektrisch betätigbare Pumpe (105) angeordnet ist, welche durch die Steuerung (108) zur Bereitstellung der vorgebbaren Kraft steuerbar ist; und wobei

c) das Stellmodul einen Anschlussteil (110; 210) zur Übertragung der vorgebbaren Kraft auf ein in der Armatur angeordnetes Ventil (30) umfasst.

16. Stellmodul nach Anspruch 15, **dadurch gekennzeichnet, dass** der Antrieb (100) eine Kammer (101) zur Aufnahme der Hydraulikflüssigkeit sowie einen in der Kammer (101) beweglichen, gegenüber Kammerwänden abdichtend angeordneten Kolben (102) umfasst, wobei der erste Kammerraum (103) auf einer ersten Seite des Kolbens (102) und der zweite Kammerraum (104) auf einer zweiten Seite des Kolbens (102) ausgebildet sind und wobei der Kolben (102) mit dem Anschlussteil (110) mechanisch verbunden ist.

17. Stellmodul nach Anspruch 15, **dadurch gekennzeichnet, dass** die Kammerräume (203, 204) durch eine flexible Membran (209) voneinander abgetrennt sind, wobei der Anschlussteil (210) mit einer Vorderseite der Membran (209) zusammenwirkt.

18. Ventilmodul für eine Armatur nach Anspruch 11, mit einem Ventil (30) und Federmitteln (80), wobei das Ventil (30), durch die Federmittel (80) vorgespannt ist, **dadurch gekennzeichnet, dass** das Ventilmodul Befestigungsmittel zum Anbringen eines Antriebs (100) zum Bereitstellen einer vorgebbaren Kraft umfasst und dass es derart ausgebildet ist, dass nach Anbringen des Antriebs (100) die vom Antrieb (100) bereitgestellte Kraft parallel zur Vorspannung auf das Ventil (30) wirken kann.

19. Verfahren zum Betreiben der Armatur nach einem der Ansprüche 1 bis 14, **dadurch gekennzeichnet, dass** die Vorspannung der Federmittel (80) derart eingestellt wird, dass bei Ausbleiben der vorgebbaren Kraft ein auslassseitiger Druck resultiert, welcher einen vorgegebenen Maximaldruck nicht überschreitet.

20. Anordnung zur Verteilung von Warm- und Kaltwasser, umfassend

a) mindestens eine erste Zuleitung (311, 312, 313, 314) für Kaltwasser;
b) eine zweite Zuleitung (340);
c) eine Einrichtung (330) zur Erzeugung von Warmwasser, welche in der zweiten Zuleitung (340) vorgesehen ist;
**dadurch gekennzeichnet, dass**
d) mindestens eine Armatur (321, 322, 323, 324) nach einem der Ansprüche 1 bis 14 in der mindestens einen ersten Zuleitung (311, 312, 313, 314) sowie mindestens eine weitere Armatur (325) nach einem der Ansprüche 1 bis 14 in der zweiten Zuleitung (340) vorhanden ist.

**Fig. 1**

**Fig. 4**

**Fig. 2A**

**Fig. 2B**

**Fig. 3**

**Europäisches Patentamt**

**EUROPÄISCHER RECHERCHENBERICHT**

Nummer der Anmeldung

EP 05 40 5521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 791 954 A (HASEGAWA ET AL) 20. Dezember 1988 (1988-12-20) | 1,7,11, 18 | G05D16/20 |
| A | * Spalte 7, Zeile 35 - Spalte 9, Zeile 20; Abbildung 6 * | 2-6, 8-10, 12-17, 19,20 | |
| | ----- | | |
| X | US 2002/036013 A1 (INAYAMA NAOTO ET AL) 28. März 2002 (2002-03-28) | 1,8 | |
| A | * das ganze Dokument * | 2-7,9-20 | |
| | ----- | | |
| X | US 4 773 443 A (MAURER ET AL) 27. September 1988 (1988-09-27) | 1,7 | |
| A | * das ganze Dokument * | 2-6,8-20 | |
| | ----- | | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| Den Haag | 28. Februar 2006 | Philippot, B |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 40 5521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2006

| Im Recherchenbericht angeführtes Patentdokument | Datum der Veröffentlichung | Mitglied(er) der Patentfamilie | Datum der Veröffentlichung |
|---|---|---|---|
| US 4791954       A | 20-12-1988 | AU      575181 B2 | 21-07-1988 |
| | | AU     4485085 A | 10-04-1986 |
| | | BR     8504038 A | 10-06-1986 |
| | | CA     1276522 C | 20-11-1990 |
| | | DE     3534393 A1 | 07-05-1986 |
| | | FR     2571159 A1 | 04-04-1986 |
| | | GB     2165372 A | 09-04-1986 |
| | | IT     1185968 B | 18-11-1987 |
| | | JP    61084715 A | 30-04-1986 |
| | | KR     8905076 B1 | 09-12-1989 |
| | | NL     8502280 A | 01-05-1986 |
| | | ZA     8506237 A | 30-04-1986 |
| US 2002036013   A1 | 28-03-2002 | JP     3634733 B2 | 30-03-2005 |
| | | JP  2002099331 A | 05-04-2002 |
| US 4773443       A | 27-09-1988 | DE     3702959 A1 | 11-08-1988 |
| | | DK      601587 A | 01-08-1988 |
| | | FI      874723 A | 01-08-1988 |
| | | JP    63196914 A | 15-08-1988 |
| | | NO      874505 A | 01-08-1988 |
| | | PT       86421 A | 30-01-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3330299 A1
- US 20050016593 A1
- JP 10143252 A
- DE 19643788 A1